# DEMANDE DE BREVET EUROPEEN

(11) **EP 1 116 917 A1**
(43) Date de publication de la demande: **18.07.2001**
(21) Numéro de dépôt: 00420252.9
(22) Date de dépôt: 06.12.2000
(51) Int. Cl.: F23J 13/02, F23J 13/04, F16L 39/00

(54) **Conduit, notamment conduit de fumée avec conduit de ventilation concentrique**

(30) Priorité: 17.01.2000 FR 0000545
(71) Demandeur: Etablissements Pomel, 43360 Vergongheon (FR)
(72) Inventeur: Menier, Gérard, 42130 Boen (FR)
(74) Mandataire: Maureau, Philippe

(57) **Abrégé**

Ce conduit comporte plusieurs éléments de conduits de cheminée présentant chacun un tube intérieur (2) et un tube extérieur (4) reliés l'un à l'autre par au moins une entretoise (6) ou équivalent, deux éléments de conduit étant chaque fois reliés l'un à l'autre.

Le tube intérieur (2) est un tube en matière céramique et le tube extérieur (4) un tube métallique.

Le tube intérieur présente une longueur plus importante que le tube extérieur, et un manchon est prévu pour le raccordement de deux tubes extérieurs voisins.

## Description

La présente invention concerne un conduit, notamment conduit de fumée, avec conduit de ventilation concentrique. Elle concerne également des éléments qui composent un tel conduit. Un tel conduit est notamment destiné au raccordement d'appareils de chauffage à circuit de combustion étanche.

Quel que soit son combustible, tout l'appareil de chauffage à combustion consomme de l'air (comburant) qu'il faut donc lui apporter, et génère des produits de combustion qu'il est nécessaire d'évacuer.

La façon dont sont assurées les fonctions d'amenée d'air et d'évacuation des produits de combustion permet de dégager une typologie des systèmes mis en place.

On distingue les appareils à circuit de combustion non étanche, et les appareils à circuit de combustion étanche.

Les premiers prélèvent l'air nécessaire à la combustion directement dans le local où est implanté l'appareil. Dans ce cas l'évacuation des produits de combustion est assurée par un conduit en tirage naturel ou par extraction mécanique.

Les appareils à circuit de combustion étanche prélèvent l'air comburant directement à l'extérieur du local où ils sont implantés et y rejettent également les produits de combustion. Ces appareils sont donc totalement indépendants pour leur fonctionnement des conditions d'aération du local ; ce qui assure une meilleure maîtrise du rendement.

Pour ce type d'appareils, l'alimentation en air comburant et l'évacuation des fumées peuvent être réalisées de différentes manières.

Placé près d'un mur périphérique de l'habitation, l'appareil peut être alimenté en air et rejeter les produits de combustion à travers le mur par deux tubes concentriques ayant chacun leur rôle. Ce type de conduit appelé aussi ventouse par l'homme de l'art, est horizontal dans ce cas. Pour un appareil éloigné des murs périphériques, le même principe est adopté mais avec deux conduits concentriques verticaux débouchant en toiture. L'amenée d'air et l'élimination des fumées peuvent également être assurées par deux conduits distincts horizontaux et souvent parallèles, ou avec une variante, l'un des deux étant horizontal et l'autre vertical.

Deux conduits concentriques largement dimensionnés peuvent desservir plusieurs appareils à combustion étanche. C'est le cas dans un immeuble comportant plusieurs logements sur plusieurs niveaux.

Ces conduits concentriques sont par exemple deux tubes métalliques parallèles concentriques maintenus l'un par rapport à l'autre à l'aide d'entretoises. Pour réaliser un conduit, on emboîte par exemple plusieurs éléments formés par deux tubes concentriques les uns sur les autres. On réalise ainsi un emboutissage mâle/femelle.

Bien qu'étant soumis à des températures relativement peu élevées, le tube métallique intérieur est sujet à la corrosion. Il est nécessaire d'utiliser un alliage noble pour réaliser ce tube intérieur. Malgré tout, la résistance dans le temps d'un tel conduit est toujours limitée.

La présente invention a pour but de fournir un conduit avec ventilation extérieure résistant à la corrosion. De préférence, ce conduit sera composé d'éléments pouvant être montés facilement et rapidement.

À cet effet, le conduit qu'elle propose est un conduit, notamment conduit de fumée, avec un conduit de ventilation concentrique, comportant plusieurs éléments de conduits de cheminée présentant chacun un tube intérieur et un tube extérieur reliés l'un à l'autre par au moins une entretoise ou équivalent, deux éléments de-conduit étant chaque fois reliés l'un à l'autre.

Selon l'invention, le tube intérieur est un tube en matière céramique et le tube extérieur un tube métallique, le tube intérieur présente une longueur plus importante que le tube extérieur, et un manchon est prévu pour le raccordement de deux tubes extérieurs voisins.

Cette forme de réalisation permet l'utilisation d'un tube intérieur en matière céramique résistant à la corrosion combiné à une gaine métallique extérieure assurant une ventilation du conduit intérieur.

Dans une forme de réalisation avantageuse, chaque tube intérieur présente à chacune de ses deux extrémités au moins une saillie radiale, un joint d'étanchéité en matériau céramique est disposé entre deux tubes intérieurs voisins et des moyens de serrage sont prévus pour serrer l'une contre l'autre les saillies radiales de deux tubes intérieurs voisins en comprimant ainsi le joint d'étanchéité. Cette forme de réalisation permet, avec un montage simple et rapide d'obtenir une excellente étanchéité entre deux tubes intérieurs. Chaque tube intérieur est par exemple alors de forme générale cylindrique circulaire et présente à chacune de ses extrémités un collet de forme tronconique s'évasant vers l'extrémité correspondante, les moyens de serrage étant par exemple constitués par un collier de serrage sensiblement torique dont la section est en V et un boulon de serrage ou équivalent.

Chaque élément comporte une entretoise qui, dans une forme de réalisation préférée est formée par une bague entourant le conduit intérieur et de laquelle font saillie radialement des pattes, de préférence au nombre de quatre. Trois pattes, voire deux, pourraient éventuellement suffire mais il faut alors de faibles tolérances de fabrication pour garantir un bon maintien des tubes intérieurs et extérieurs les uns par rapport aux autres. Le nombre de quatre pattes est un bon compromis entre des exigences de maintien mécanique et des exigences économiques.

Les sommets des pattes de chaque entretoise logent avantageusement dans une rainure périphérique réalisée dans la surface intérieure du tube extérieur. Une liaison par encliquetage peut alors être réalisée entre le tube intérieur et le tube extérieur.

Le manchon de liaison entre deux tubes extérieurs voisins est par exemple un manchon qui est fendu longitudinalement et les deux bords de la fente sont par exemple reliés par un système de fermeture à genouillère.

Pour un bon positionnement du manchon sur les tubes extérieurs qu'il relie, le tube extérieur présente par exemple sur sa face extérieure un bourrelet périphérique correspondant à la rainure destinée à recevoir l'entretoise, ce bourrelet périphérique extérieur est disposé avantageusement à proximité d'une extrémité du tube extérieur et le manchon présente deux rainures intérieures, chaque rainure correspondant à un bourrelet d'un tube extérieur. Le manchon est alors bien positionné sur les tubes extérieurs et de plus, la coopération des bourrelets et rainures assure un bon maintien axial du manchon sur les tubes extérieurs.

La présente invention concerne également un élément de conduit destiné notamment à la réalisation d'un conduit de cheminée avec ventilation extérieure, comportant un tube intérieur et un tube extérieur maintenus en position l'un par rapport à l'autre à l'aide d'au moins une entretoise, caractérisé en ce que le tube intérieur est un tube en matière céramique et le tube extérieur un tube métallique, et en ce que le tube intérieur présente une longueur plus importante que le tube extérieur. Un tel tube sert à la réalisation par exemple d'un conduit de cheminée tel que décrit ci-dessus.

Dans un élément de conduit selon l'invention, le tube intérieur est par exemple de forme générale cylindrique circulaire et présente avantageusement à chacune de ses extrémités un collet de forme tronconique s'évasant vers l'extrémité correspondante. Cette forme de réalisation permet une bonne liaison entre deux tubes intérieurs voisins permettant de réaliser une bonne étanchéité tout en étant rapide à assembler.

De toute façon, l'invention sera bien comprise à l'aide de la description qui suit, en référence au dessin schématique annexé, représentant à titre d'exemple non limitatif une forme de réalisation préférentielle d'éléments de conduit selon l'invention.
Figure 1 est une vue en élévation, partiellement écorchée, montrant un élément de conduit selon l'invention et deux extrémités d'éléments de conduit voisins,
Figure 2 montre en perspective à échelle agrandie un collier de serrage,
Figure 3 montre en perspective à sensiblement même échelle une entretoise,
Figure 4 montre en perspective un manchon de liaison, toujours à la même échelle,
Figure 5 est une vue en coupe longitudinale d'un raccord de deux éléments de conduit selon la ligne de coupe V-V de la figure 6, une entretoise n'étant pas coupée, et
Figure 6 est une vue en coupe selon la ligne de coupe VI-VI de la figure 5.

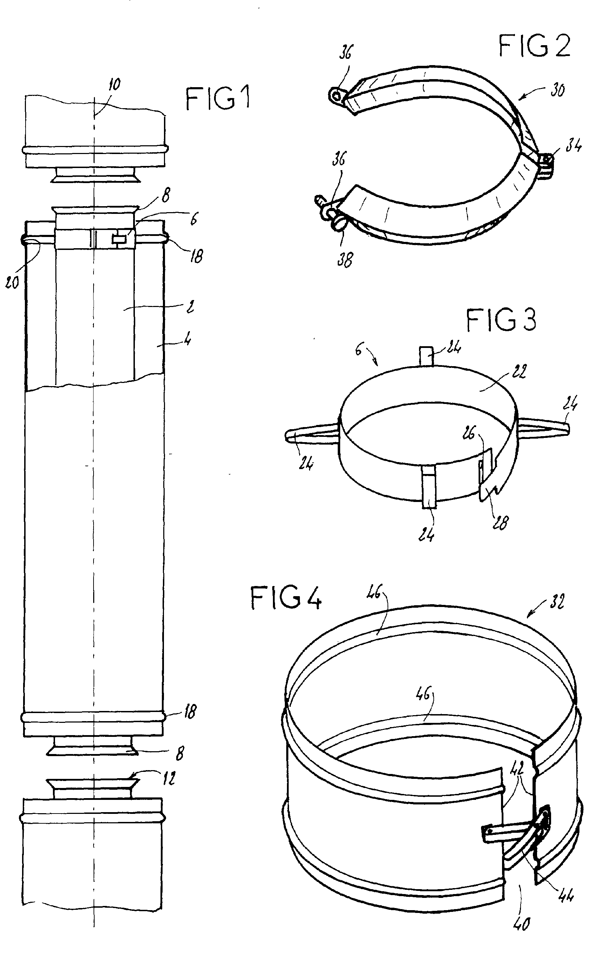

La figure 1 représente un élément qui, assemblé à d'autres, est destiné à constituer un conduit de fumée. Cet élément comporte un tube intérieur 2 et un tube extérieur 4, une entretoise 6 étant disposée à proximité de chaque extrémité des tubes 2 et 4 pour maintenir en position le tube intérieur par rapport au tube extérieur.

Le tube intérieur 2 est de forme générale cylindrique circulaire. Il présente à ses deux extrémités un collet 8 de forme tronconique. La base de grand diamètre du tronc de cône forme une face d'extrémité du tube intérieur 2 et le sommet de diamètre plus restreint du tronc de cône se rattache au corps cylindrique circulaire du tube 2. Ce dernier présente donc une forme de révolution autour d'un axe 10 et présente à chaque extrémité une surface annulaire plane transversale 12. Le diamètre extérieur de cette surface 12 correspond au grand diamètre d'un collet 8 et le diamètre intérieur de cette surface 12 correspond au diamètre intérieur du tube intérieur.

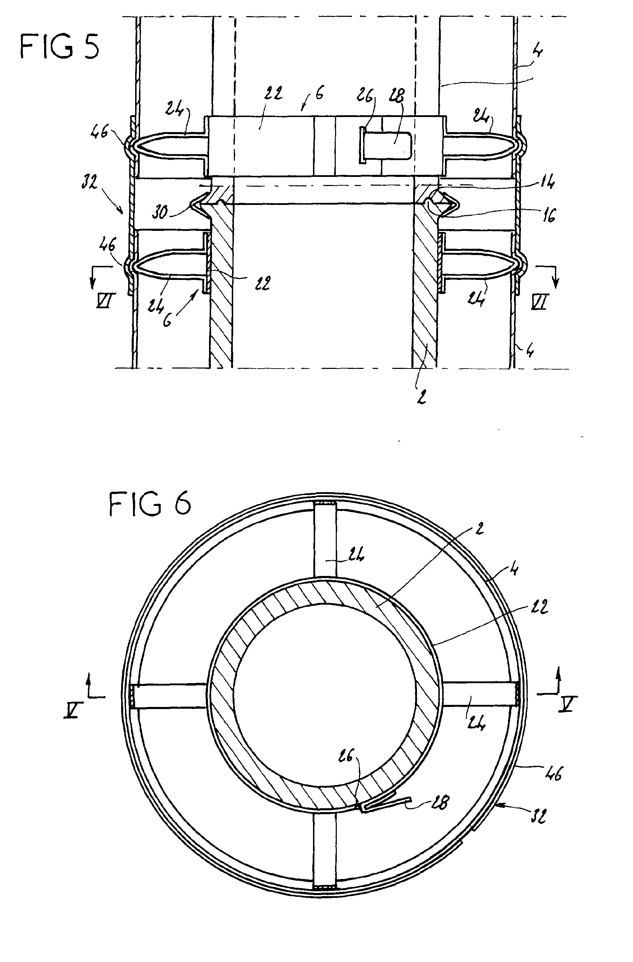

Comme on peut le voir sur la figure 5, une rainure 14 annulaire est réalisée au niveau d'une surface annulaire plane 12 du tube intérieur 2 tandis qu'une nervure 16 annulaire de forme complémentaire à la forme de la rainure 14 est réalisée sur la surface annulaire plane 12 opposée. Un joint, non représenté et de forme adaptée, vient prendre place à chaque fois entre deux tubes intérieurs 2. Il est placé entre deux surfaces 12, l'une munie d'une rainure 14, l'autre munie d'une nervure 16. La présence de cette nervure et de cette rainure permet un positionnement exact d'un tube intérieur 2 par rapport à un autre. Cette forme est également favorable pour l'étanchéité réalisée grâce au joint qui est un joint plat reprenant sensiblement la forme des surfaces 12. Ce joint est réalisé dans un tissu céramique réfractaire. Il vient se positionner à chaque fois entre deux tubes intérieurs 2 voisins en étant sensiblement centré sur l'axe 10.

Le tube intérieur 2 est réalisé en matériau céramique à base d'argile. Il est par exemple obtenu par pressage hydrostatique.

Le tube extérieur 4 présente également une forme cylindrique circulaire. Son diamètre intérieur est supérieur au diamètre extérieur du tube intérieur 2, de telle manière que le tube intérieur 2 puisse prendre place dans le tube extérieur 4 tout en permettant une circulation d'air autour du tube intérieur 2. La longueur du tube extérieur 4 est inférieure à la longueur du tube intérieur 2.

Le tube extérieur 4 est réalisé dans une tôle métallique. Sa surface extérieure présente à chacune de ses extrémités un bourrelet périphérique 18. A ce bourrelet périphérique extérieur correspond une rainure 20 intérieure.

Les entretoises 6 permettent de maintenir le tube intérieur 2 centré dans le tube extérieur 4. Ainsi les tubes intérieur 2 et extérieur 4 sont sensiblement concentriques autour de l'axe 10. Par rapport à la longueur des tubes, le tube extérieur 4 est également centré par rapport au tube intérieur 2.

L'entretoise 6 est montrée plus en détail sur la figure 3. Cette entretoise comporte une bague 22 et quatre pattes 24. La bague 22 est une bande métallique enroulée de manière à présenter un diamètre intérieur correspondant sensiblement au diamètre extérieur du tube intérieur 2. Une extrémité de cette bande métallique est munie d'une fente 26 tandis que l'autre extrémité de cette bande métallique est munie d'un doigt 28. La largeur du doigt 28 est telle que ce dernier puisse passer dans la fente 26. La bague 22 est mise en place autour du tube intérieur 2 alors que le doigt 28 est hors de la fente 26. Pour fixer la bague 22 sur le tube intérieur 2, on passe le doigt 28 dans la fente 26 par l'intérieur puis on replie le doigt 28 vers l'extérieur.

Les pattes 24 sont également réalisées à partir d'une bande métallique. Cette bande métallique est pliée de manière à former un triangle isocèle. La base de ce triangle est fixée sur la surface extérieure de la bague 22. Pour cette fixation, on réalise par exemple un point de soudure électrique pour relier la base du triangle avec la surface extérieure de la bague 22. Les quatre pattes 24 sont sensiblement identiques. Elles sont fixées sur la bague 22 de manière à se trouver décalées d'environ 90° l'une par rapport à l'autre lorsque l'entretoise est en place sur le tube intérieur 2. La hauteur des pattes 24 est telle que lorsque la bague 22 est en place autour d'un tube intérieur 2, le sommet du triangle formé par les pattes 24 puisse prendre place à l'intérieur d'une rainure 20 réalisée dans un tube extérieur 4 en réalisant un encliquetage. Ainsi, lorsque l'entretoise est en place, elle empêche un déplacement axial involontaire entre le tube intérieur et le tube extérieur.

On réalise donc le montage d'un élément de conduit en plaçant deux entretoises sur un tube intérieur 2 puis en enfilant ce tube intérieur 2 muni de deux entretoises 6 dans un tube extérieur 4. Les entretoises 6 sont placées de telle manière que le tube extérieur 4 est centré axialement par rapport au tube intérieur 2. De chaque côté du tube extérieur 4 fait donc saillie une extrémité du tube 2 et notamment un collet 8.

Les entretoises 6 permettent de bien maintenir les tubes intérieur et extérieur en position l'un par rapport à l'autre pendant le transport d'éléments de conduit. L'encliquetage est assez fort pour empêcher tout déboîtement du tube intérieur par rapport au tube extérieur lors des manipulations d'un élément de conduit.

La liaison entre deux éléments de conduit est réalisée à l'aide d'un collier de serrage 30 et d'un manchon 32. Un collet de serrage 30 est montré plus en détail sur la figure 2 tandis que la figure 4 montre plus en détail un manchon 32.

Le collier de serrage 30 sert à relier deux tubes intérieurs 2 voisins mais aussi à mettre le joint placé entre ces deux tubes sous pression. Il est de forme générale torique et présente une section en V, la pointe du V se situant à l'extérieur du tore. Ce collier 10 est réalisé en deux parties de longueur sensiblement égale. Ces deux parties sont articulées à une extrémité à l'aide d'une charnière 34 et sont munies chacune à leur autre extrémité d'une patte 36. Les deux pattes 36 sont munies d'un perçage de telle sorte qu'elles puissent être reliées par un boulon 38. On retrouve là une structure générale de collier connue de l'homme du métier.

Le collier 30 doit permettre de mettre le joint sous pression. A cet effet, l'angle formé par les branches du V formant la section du collier 30 est inférieur, de préférence strictement inférieur, au double de l'angle formé entre la surface annulaire plane 12 d'un tube intérieur et la surface tronconique du collet 8 correspondant.

Lorsque le collier 30 est en place autour de deux collets 8 de tubes intérieurs 2 et d'un joint, le serrage du boulon 38 permet de réaliser la liaison mécanique entre les deux tubes intérieurs 2 voisins et la mise en compression du joint intercalé entre ces deux tubes 2. On réalise ainsi une liaison mécanique étanche à l'eau et à l'air grâce au joint. Ce dernier est un joint sec qui dans ces conditions de montage résiste à des températures élevées et à des agressions chimiques acides.

Le manchon 32 représenté sur la figure 4 est destiné à relier deux tubes extérieurs 4 de manière à assurer une continuité du conduit de ventilation autour du tube intérieur 2. Ce manchon 32 est de forme cylindrique circulaire et présente une fente 40 axiale. Les deux bords 42 de la fente sont reliées par un mécanisme à genouillère 44 permettant le rapprochement ou l'éloignement de ces deux bords 42. Un tel mécanisme est connu de l'homme du métier. Il comporte deux bras. Un premier bras est monté pivotant autour d'un axe placé à proximité d'un bord 42 et parallèle à ce bord. L'autre bras est également monté pivotant autour d'un axe parallèle à l'autre bord 42 et à proximité de cet autre bord. La seconde extrémité du second bras est fixée quant à elle autour d'un troisième axe parallèle aux deux premiers, sur le premier bras. On réalise ainsi un triangle déformable à l'aide des deux bras. En agissant sur le premier bras on joue sur la longueur de la base du triangle ce qui provoque le rapprochement ou l'éloignement des deux bords 42 de la fente 40. On peut ainsi réaliser un serrage. Un tel dispositif est connu de l'homme du métier.

Le manchon 32 présente sur sa surface intérieure, à proximité de ses extrémités, chaque fois une rainure périphérique 46. Ces deux rainures 46 sont disposées à une distance correspondant à la distance séparant deux bourrelets 18 de deux tubes extérieurs 4 voisins lorsque les tubes intérieurs 2 correspondants sont montés. Bien entendu, la forme de la rainure 46 correspond à la forme d'un bourrelet 18.

Le manchon 32 est de préférence réalisé dans le même matériau que les tubes extérieurs 4.

Le montage de deux éléments de conduit se fait très rapidement. Il suffit en effet de placer un joint sur une surface annulaire plane 12 d'un tube intérieur, de placer le second tube annulaire sur ce joint et de mettre en place un collier de serrage 30. Ensuite, on vient mettre en place un manchon 32 afin d'assurer une continuité entre les deux tubes extérieurs 4. On réalise ainsi très rapidement le montage d'un conduit.

Le conduit ainsi réalisé présente l'avantage d'être insensible à la corrosion. Le joint utilisé étant parfaitement étanche, les tubes métalliques extérieurs ne sont pas agressés par les fumées circulant à l'intérieur des tubes intérieurs 2.

Comme il va de soi, l'invention ne se limite pas à la forme de réalisation préférentielle décrite ci-dessus à titre d'exemple non limitatif ; elle en embrasse au contraire toutes les variantes dans le cadre des revendications ci-après.

Ainsi, d'autres formes pourraient être données tant au tube intérieur qu'au tube extérieur. La section circulaire de ces tubes n'est pas imposée. On pourrait bien entendu avoir une section carrée, polygonale, etc...

Le système de raccordement des tubes intérieurs pourrait être tout à fait différent du raccordement original décrit ici. On pourrait par exemple avoir des tubes intérieurs assemblés par emboîtement comme par exemple décrit dans le document EP-0 424 617.

Le manchon extérieur n'est pas forcément positionné par rapport aux tubes extérieurs à l'aide de deux rainures et de bourrelets correspondants. De même, le mécanisme de fermeture de ce manchon pourrait être tout à fait différent.

## Revendications

1. Conduit, notamment conduit de fumée, avec un conduit de ventilation concentrique, comportant plusieurs éléments de conduits de cheminée présentant chacun un tube intérieur (2) et un tube extérieur (4) reliés l'un à l'autre par au moins une entretoise (6) ou équivalent, deux éléments de conduit étant chaque fois reliés l'un à l'autre,
caractérisé en ce que le tube intérieur (2) est un tube en matière céramique et le tube extérieur (4) un tube métallique,
en ce que le tube intérieur (2) présente une longueur plus importante que le tube extérieur, et
en ce qu'un manchon (32) est prévu pour le raccordement de deux tubes extérieurs (4) voisins.

2. Conduit selon la revendication 1, caractérisé en ce que chaque tube intérieur (2) présente à chacune de ses deux extrémités au moins une saillie (8) radiale, en ce qu'un joint d'étanchéité en matériau céramique est disposé entre deux tubes intérieurs voisins et en ce que des moyens de serrage (30) sont prévus pour serrer l'une contre l'autre les saillies (8) radiales de deux tubes intérieurs voisins en comprimant ainsi le joint d'étanchéité.

3. Conduit selon la revendication 2, caractérisé en ce que chaque tube intérieur (2) est de forme générale cylindrique circulaire et présente à chacune de ses extrémités un collet (8) de forme tronconique s'évasant vers l'extrémité correspondante, et en ce que les moyens de serrage sont constitués par un collier de serrage (30) sensiblement torique dont la section est en V et un boulon (38) de serrage ou équivalent.

4. Conduit selon l'une des revendications 1 à 3, caractérisé en ce que chaque élément comporte une entretoise (6) formée par une bague (22) entourant le conduit intérieur (2) et de laquelle font saillie radialement des pattes (24), de préférence au nombre de quatre.

5. Conduit selon la revendication 4, caractérisé en ce que les sommets des pattes (24) de chaque entretoise (6) logent dans une rainure (20) périphérique réalisée dans la surface intérieure du tube extérieur (4).

6. Conduit selon l'une des revendications 1 à 5, caractérisé en ce que le manchon de liaison (32) est fendu longitudinalement et en ce que les deux bords (42) de la fente (40) sont reliés par un système de fermeture à genouillère (44).

7. Conduit selon les revendications 5 et 6, caractérisé en ce que le tube extérieur (4) présente sur sa face extérieure un bourrelet périphérique (18) correspondant à la rainure (20) destinée à recevoir l'entretoise (6), en ce que chaque tube extérieur présente au moins un bourrelet périphérique extérieur disposé à proximité d'une extrémité du tube extérieur et en ce que le manchon (32) présente deux rainures intérieures (46), chaque rainure correspondant à un bourrelet d'un tube extérieur.

8. Élément de conduit destiné notamment à la réalisation d'un conduit de cheminée avec ventilation extérieure, comportant un tube intérieur (2) et un tube extérieur (4) maintenu en position l'un par rapport à l'autre à l'aide d'au moins une entretoise (6), caractérisé en ce que le tube intérieur (2) est un tube en matière céramique et le tube extérieur (4) un tube métallique, et en ce que le tube intérieur présente une longueur plus importante que le tube extérieur.

9. Élément selon la revendication 8, caractérisé en ce que le tube intérieur (2) est de forme générale cylindrique circulaire et présente à chacune de ses extrémités un collet (8) de forme tronconique s'évasant vers l'extrémité correspondante.
